# EUROPÄISCHE PATENTANMELDUNG

(11) **EP 2 452 978 A1**
(43) Veröffentlichungstag der Anmeldung: **16.05.2012**
(21) Anmeldenummer: 10191365.5
(22) Anmeldetag: 16.11.2010
(51) Int. Cl.: C08L 63/00, C08J 3/22, C08K 3/02, B82Y 30/00

(54) **Verfahren zur Herstellung von mit Kohlenstoff-Füllstoffen gefüllten Epoxidharzformmassen**

(71) Anmelder: BASF SE, 67056 Ludwigshafen (DE)
(72) Erfinder: Gibon, Cécile, 68159, Mannheim (DE); Yang, Xin, 64625, Bensheim (DE); Kujat, Christof, Dr., 67434 Neustadt a.d. Weinstrasse (DE); Stumbé, Jean-Francois, Dr., 67200 Strasbourg (FR)
(74) Vertreter: Féaux de Lacroix, Stefan

(57) **Zusammenfassung**

In einem Verfahren zur Herstellung von mit Kohlenstoff-Füllstoffen gefüllten Epoxidharzformmassen durch Einbringen der Kohlenstoff-Füllstoffe in ein Epoxidharz, das einen Reaktivverdünner enthalten kann, in einem gleichläufigen Doppelschneckenextruder, weist das Epoxidharz einen Gehalt an Epoxidgruppen von 80 bis 550 g/eq, vorzugsweise 130 bis 400 g/eq, auf.

## Beschreibung

Die Erfindung betrifft Verfahren zur Herstellung von mit Kohlenstoff-Füllstoffen gefüllten Epoxidharzformmassen, nach dem Verfahren erhältliche Epoxidharzformmassen und deren Verwendung als Masterbatch zum Einbringen in Epoxidharze.

Das Einbringen von Kohlenstoff-Füllstoffen in Epoxidharze ist an sich bekannt. Zur Herstellung von fein dispergierten und stabilen Dispersionen der Kohlenstoff-Füllstoffe in Epoxidharzen werden unterschiedliche Verfahren angewendet, beispielsweise das Einbringen mittels Ultraschall, mittels Drei-Rollen-Mühlen, mittels Verteilerscheiben (Dissolver-Disc) und durch Extrusion.

Die DE-A-10 2009 013 418 beschreibt die Dispersion von Nanopartikeln in fluiden Medien mithilfe von Extrudern.

Die WO 2006/026691 betrifft leitfähige Thermosets, die durch Extrusion hergestellt werden. Damit können beispielsweise Epoxidharze mittels Extrusion mit Kohlenstoff-Nanotubes gemischt werden. Die einsetzbaren Epoxidharze weisen einen Gehalt an Epoxidgruppen von mehr als 600 g/eq auf, vorzugsweise im Bereich von 600 bis 4000 g/eq, insbesondere im Bereich von 1000 bis 3800 g/eq. Ferner ist angegeben, dass die Epoxidharze Viskositäten von mehr als 15 Poise, vorzugsweise zwischen 20 und 600 Poise, insbesondere zwischen 50 und 500 Poise aufweisen sollen. Es ist angegeben, dass die Temperatur im Extruder angepasst werden kann, um die gewünschte Viskosität zu erreichen. Ferner ist angegeben, dass der Schmelzpunkt des Epoxidharzvorläufers größer als 30 °C sein soll, vorzugsweise im Bereich von 30 bis 350 °C liegen soll. Die Extrusionstemperatur gemäß den Beispielen beträgt zumindest in einem Bereich des Extruders mindestens 200 °F, entsprechend mindestens 93,3 °C. Gemäß Beispiel 13 werden Kohlenstoff-Nanotubes mit Epon 1009 gemischt, und dieser Masterbatch wird mit Epon 828 als Verdünnungsmittel vermischt mit einem Versa Mix-Mischer. Das Epon 1009 weist einen Epoxidgehalt von 2300 bis 3500 g/eq auf.

Aufgabe der vorliegenden Erfindung ist die Bereitstellung eines Verfahrens zur Herstellung von mit Kohlenstoff-Füllstoffen gefüllten Epoxidharzformmassen durch Einbringen der Kohlenstoff-Füllstoffe in ein Epoxidharz in einem Extruder, das einen Betrieb des Extruders im Bereich der Raumtemperatur erlaubt, wobei auch Epoxidharze mit niedrigem Gehalt an Epoxidgruppen einsetzbar sein sollen.

Die Aufgabe wird erfindungsgemäß gelöst durch ein Verfahren zur Herstellung von mit Kohlenstoff-Füllstoffen gefüllten Epoxidharzformmassen durch Einbringen der Kohlenstoff-Füllstoffe in ein Epoxidharz, das einen Reaktivverdünner enthalten kann, in einem gleichläufigen Doppelschneckenextruder, wobei das Epoxidharz einen Gehalt an Epoxidgruppen von 80 bis 550 g/eq, vorzugsweise 130 bis 400 g/eq, aufweist.

Der Gehalt an Epoxidgruppen im Epoxidharz beträgt dabei erfindungsgemäß 80 bis 550 g/eq, vorzugsweise 130 bis 400 g/eq, insbesondere 150 bis 250 g/eq. Beim Gehalt an Epoxidgruppen handelt es sich um den Epoxidwert, der angibt, wie viel Gramm Epoxidharz erforderlich sind, um ein Äquivalent an Epoxidgruppen bereitzustellen. Der Epoxidwert kann beispielsweise gemäß ASTM D 1652 bestimmt werden. Bei Epoxidharzen, die einen Reaktivverdünner enthalten, bezieht sich der Gehalt auf das Gemisch aus Harz und enthaltenem Reaktivverdünner.

Es wurde erfindungsgemäß gefunden, dass Epoxidharze mit einem Gehalt an Epoxidgruppen von 80 bis 550 g/eq in besonderer Weise zum Einbringen von Kohlenstoff-Füllstoffen mittels eines Extruders bei Raumtemperatur geeignet sind. Nach dem Stand der Technik erschien es nicht möglich, Kohlenstoff-Füllstoffe in derartige Epoxidharze mittels eines Extruders einzubringen.

Das erfindungsgemäß eingesetzte Epoxidharz weist vorzugsweise einen Schmelzpunkt von weniger als 60 °C, besonders bevorzugt von weniger als 45 °C, insbesondere von weniger als 40 °C auf. Vorzugsweise weist das Epoxidharz bereits bei 25 °C eine Viskosität auf, die es zum Verarbeiten im Extruder bei Umgebungstemperatur geeignet macht.

Die Extrusion erfolgt vorzugsweise bei einer Temperatur im Bereich von 10 bis 60 °C, besonders bevorzugt 20 bis 45 °C, insbesondere 20 bis 30 °C.

Der Begriff "Epoxidharz" bezeichnet dabei das Epoxidharz mit allen Zusatzkomponenten, in das im Extruder die Kohlenstoff-Füllstoffe eingebracht werden. Beispielsweise kann das Epoxidharz gemäß einer Ausführungsform der Erfindung einen Reaktivverdünner enthalten. Gemäß einer weiteren Ausführungsform der Erfindung enthält es keinen Reaktivverdünner. Beim Vorliegen eines Reaktivverdünners bezieht sich der Gehalt an Epoxidgruppen auf das Gesamtsystem aus Harz und Reaktivverdünner. Dabei beträgt der Anteil der Reaktivverdünner am Epoxidharz (ohne die Kohlenstoff-Füllstoffe mitzurechnen) 0 bis 50 Gew.-%, besonders bevorzugt 1 bis 25 Gew.-%. Reaktivverdünner sind nachstehend detaillierter beschrieben.

Erfindungsgemäß wurde zudem gefunden, dass besonders zur Verarbeitung im Extruder geeignete Epoxidharze vorzugsweise eine Viskosität bei 25 °C von 50 bis 15000 mPa s aufweisen, besonders bevorzugt von 500 bis 13000 mPa s.

Als Epoxidharze können beliebige geeignete Epoxidharze eingesetzt werden, die die vorstehenden Eigenschaften aufweisen. Es handelt sich dabei um härtbare Zusammensetzungen, die unter Zusatz eines Härters ausgehärtet werden können. Geeignete Epoxidharze sind beispielsweise in WO 2008/152003, WO 2009/000408, EP-A-1 810 985 und EP-A-2 113 525 beschrieben.

In Betracht kommen insbesondere Epoxyverbindungen mit 1 bis 10 Epoxygruppen, vorzugsweise mit mindestens 2 Epoxygruppen.

Besonders bevorzugt enthält die härtbare Zusammensetzung Epoxyverbindungen mit 2 bis 6, ganz besonders bevorzugt mit 2 bis 4 und insbesondere mit 2 Epoxygruppen.

Bei den Epoxygruppen handelt es sich insbesondere um Glycidylethergruppen, wie sie bei der Umsetzung von Alkoholgruppen mit Epichlorhydrin entstehen.

Bei den Epoxyverbindungen kann es sich um niedermolekulare Verbindungen, welche im Allgemeinen ein mittleres Molgewicht Mn kleiner 1000 g/mol haben oder um höhermolekulare Verbindungen (Polymere) handeln. Es kann sich um aliphatische, auch cycloaliphatische Verbindungen oder um Verbindungen mit aromatischen Gruppen handeln.

Insbesondere handelt es sich bei den Epoxyverbindungen um Verbindungen mit zwei aromatischen oder aliphatischen 6-Ringen oder deren Oligomere.

Technisch von Bedeutung sind Epoxyverbindungen, die durch Umsetzung des Epichlorhydrins mit Verbindungen, welche mindestens zwei reaktive H-Atome haben, insbesondere mit Polyolen, erhältlich sind.

Technisch von besonderer Bedeutung sind Epoxyverbindungen, die durch Umsetzung des Epichlorhydrins mit Verbindungen, welche mindestens zwei, vorzugsweise zwei Hydroxylgruppen und zwei aromatische oder aliphatische 6-Ringe enthalten, erhältlich sind; als derartige Verbindungen genannt sei insbesondere Bisphenol A und Bisphenol F, sowie hydriertes Bisphenol A und Bisphenol F.

In Betracht kommen auch Umsetzungsprodukte des Epichlorhydrins mit anderen Phenolen, z. B. mit Kresolen oder Phenol-Aldehyd-Addukten, wie Phenolformaldehydharzen, insbesondere Novolaken.

Es sind auch Epoxyverbindungen geeignet, welche sich nicht vom Epichlorhydrin ableiten. In Betracht kommen z. B. Epoxyverbindungen, welche Epoxgruppen durch Umsetzung mit Glycidyl(meth)acrylat), z. B. radikalische Copolymerisation mit Glycidyl(meth)acrylat, enthalten. Genannt sei in diesem Zusammenhang auch ERL-4221 von Dow (CAS Nummer 2386-87-0).

Epoxidharz kann ein Epoxid-Flüssigharz oder ein Epoxid-Festharz oder ein Gemisch davon sein, sofern es die vorstehenden Parameter aufweist. Die Glastemperatur von Festharzen liegt über Raumtemperatur, sodass sie sich bei Raumtemperatur zu schüttfähigen Pulvern zerkleinern lassen.

Bevorzugte Epoxid-Festharze weisen die Formel (X) auf

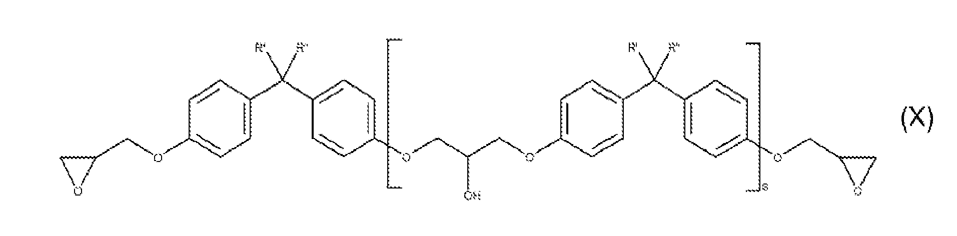

Hierbei stehen die Substituenten R' und R" unabhängig voneinander entweder für H oder CH₃. Weiterhin steht der Index s für einen Wert von > 1.5, insbesondere von 2 bis 10.

Derartige Epoxid-Festharze sind kommerziell erhältlich beispielsweise von Dow oder Huntsman oder Hexion.

Verbindungen der Formel (X) mit einem Index s zwischen 1 und 1.5 werden vom Fachmann als Semisolid-Epoxidharze bezeichnet. Für die hier vorliegende Erfindung werden sie ebenfalls als Festharze betrachtet. Bevorzugt sind jedoch Epoxidharze im engeren Sinn, d. h. wo der Index s einen Wert von > 1.5 aufweist.

Weitere bevorzugte Epoxid-Flüssigharze weisen die Formel (XI) auf

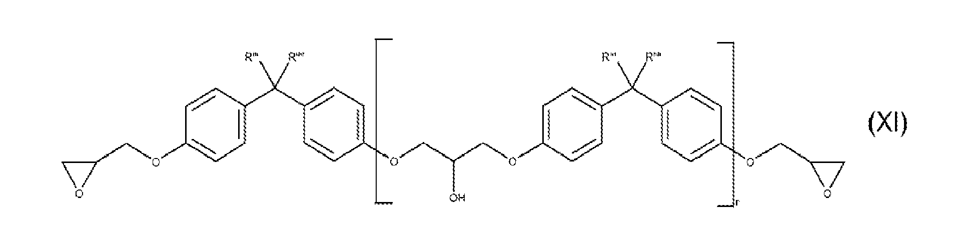

Hierbei stehen die Substituenten R'" und R"" unabhängig voneinander entweder für H oder CH₃. Weiterhin steht der Index r für einen Wert von 0 bis 1. Bevorzugt steht r für einen Wert von kleiner als 0,2.

Es handelt sich somit vorzugsweise um Diglycidylether von Bisphenol-A (DGEBA), von Bisphenol-F sowie von Bisphenol-A/F (Die Bezeichnung 'A/F' verweist hierbei auf eine Mischung von Aceton mit Formaldehyd, welche als Edukt bei dessen Herstellung verwendet wird). Solche Flüssigharze sind beispielsweise als Araldite(R) GY 250, Araldite(R) PY 304, Araldite(R) GY 282 (Huntsman) oder D.E.R.(TM) 331 oder D.E.R.(TM) 330 (Dow) oder Epikote 828 (Hexion) erhältlich.

Weiterhin geeignet als Epoxidharz A sind so genannte Novolake. Diese weisen insbesondere die folgende Formel auf:

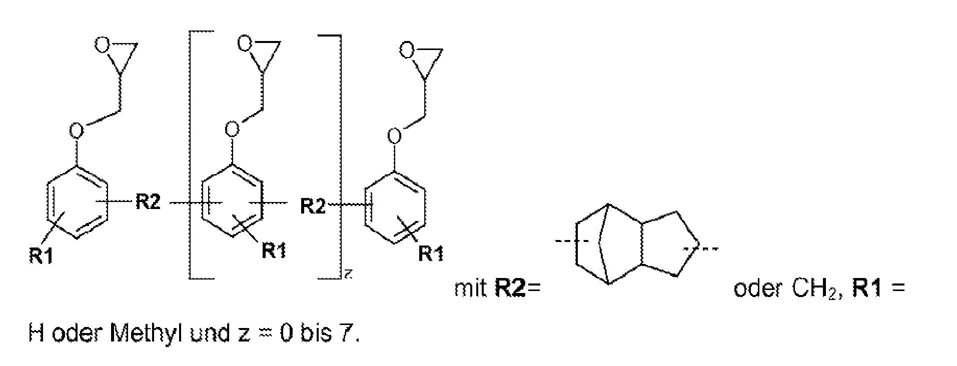

Gemäß einer Ausführungsform kann z auch höhere Werte aufweisen.

Insbesondere handelt es sich hierbei um Phenol- oder Kresol-Novolake (R2 = CH₂).

Solche Epoxidharze sind unter dem Handelnamen EPN oder ECN sowie Tactix(R) von Huntsman oder unter der Produktereihe D.E.N.(TM) von Dow Chemical kommerziell erhältlich.

Bevorzugt stellt das Epoxidharz A ein Epoxid-Flüssigharz der Formel (XI) dar. In einer noch mehr bevorzugten Ausführungsform enthält die hitzehärtende Epoxidharzzusammensetzung sowohl mindestens ein Epoxid-Flüssigharz der Formel (XI) als auch mindestens ein Epoxid-Festharz der Formel (X).

Bei den erfindungsgemäß eingesetzten Epoxidharzen handelt es sich um bei Raumtemperatur lagerstabile Produkte, die demnach normalerweise keinen Härter enthalten. Es kommen jedoch auch Einkomponentensysteme (1 K-Systeme) in Betracht, die Katalysatoren enthalten.

Epoxyverbindungen werden zur Herstellung von Beschichtungen, als Klebstoff und insbesondere zur Herstellung von Formkörpern und für viele andere Zwecke verwendet. Sie liegen dazu während der Verarbeitung im Allgemeinen in flüssiger Form vor (als Lösungen in geeigneten Lösemitteln oder als flüssige, lösemittelfreie 100 % Systeme). Die Epoxyverbindungen sind im Allgemeinen niedermolekular. Bei der Verwendung werden sie gehärtet. Es sind unterschiedliche Möglichkeiten zur Härtung bekannt. Ausgehend von Epoxyverbindungen mit mindestens zwei Epoxygruppen kann mit einer Aminoverbindung oder einer Säureanhydridverbindung mit mindestens zwei Aminogruppen bzw. mindestens einer Anydridgruppe eine Härtung durch eine Polyadditionsreaktion (Kettenverlängerung) erfolgen. Amino- oder Säureanhydridverbindungen mit hoher Reaktivität werden im Allgemeinen erst kurz vor der gewünschten Härtung zugesetzt. Es handelt sich daher um so genannte zweikomponentige (2K) Systeme.

Weiterhin können Katalysatoren für die Homo- oder Copolymerisation der Epoxyverbindungen verwendet werden. Katalysatoren, die erst bei hohen Temperaturen aktiv sind (latente Katalysatoren) haben den Vorteil, dass einkomponentige (1 K) Systeme möglich sind, d. h. die Epoxyverbindungen können die latenten Katalysatoren enthalten, ohne dass es zu einer unerwünschten frühzeitigen Härtung kommt.

Als latente Katalysatoren kommerziell erhältlich sind insbesondere Addukte des Bortrifluorids an Aminen (BF3-Monoethylamin), quaternäre Phosphoniumverbindungen und Dicyandiamid (DICY).

Im Journal of Polymer Science: Polymer Letters Edition, Vol. 21, 633-638 (1983) wird die Verwendung von 1 ,3-Dialkylimidazoliumsalzen für diesen Zweck beschrieben. Bei ihrer Zersetzung oberhalb 175 °C werden 1-Alkylimidazole freigesetzt, welche dann die Härtung bewirken. Variiert wurde die Struktur des Kations, als Anionen wurden die Halogenide Chlorid und lodid eingesetzt.

Aus DE-A 2416408 sind Imidazolum-borate, wie Imidazolium-tetraphenylborat oder Imidazolium-tetra n-butylborat bekannt.

US 3 635 894 beschreibt 1,3 Dialkyl-imidazolium-salze mit Anionen, ausgewählt aus Chloriden, Bromiden und Iodiden als latente Katalysatoren für Epoxyverbindungen.

Kowalczyk and Spychaj, Polimery (Warsaw, Poland) (2003), 48(1 1/12), 833-835 beschreiben die Verwendung von 1-Butyl-3-methyl-imidazoliumtetrafluoroborat als latenter Katalysator für Epoxyverbindungen. Die Wirkung des Katalysators setzt erst bei 190 °C ein.

Sun, Zhang and Wong, Journal of Adhesion Science and Technology (2004), 18(1), 109-121 offenbaren die Verwendung von 1-Ethyl-3-methyl-imidazoliumhexafluoro-phosphat als latenter Katalysator. Die Wirkung setzt erst bei 196 °C ein.

In JP 2004217859 werden Imidazolium-tetraalkyl-borate oder Imidazolium-dialkyldithiocarbamate verwendet. Die Aktivierung erfolgt durch Bestrahlung mit energiereichem Licht.

EP 0 458 502 offenbart eine Vielzahl unterschiedlichster Katalysatoren für Epoxyverbindungen. In der Auflistung findet sich auch das 1-Ethyl-2,3-dimethylimidazoliumace-tat (R1 = Ethyl, R2 = Methyl und R3 = Methyl in Formel I) und 1-Ethyl-2,3-dimethylimidazolium-acetatessigsäurekomplex.

Geeignete latente Katalysatoren sollen mit den Epoxyverbindungen gut mischbar sein. Die Mischungen sollen bei Raumtemperatur und üblichen Extrusions- und Lagerbedingungen möglichst lange Zeit stabil sein, so dass sie sich als lagerfähige 1 K Systeme eignen. Bei der Verwendung aber sollen die für die Härtung benötigten Temperaturen nicht allzu hoch sein, insbesondere sollen sie deutlich ≤ 200 °C sein. Durch tiefere Härtungstemperaturen können Energiekosten eingespart werden und unerwünschte Nebenreaktionen vermieden werden. Trotz der niedrigeren Härtungstemperatur sollen die mechanischen und anwendungstechnischen Eigenschaften der gehärteten Systeme möglichst nicht schlechter werden. Gewünscht ist, dass diese Eigenschaften (z. B. Härte, Flexibilität, Klebekraft etc) mindestens gleich gut sind oder sogar besser werden.

Weitere Katalysatoren sind beispielsweise in der WO 2008/152003 beschrieben.

Neben den Epoxyverbindungen kann die Zusammensetzung weitere reaktive oder nicht reaktive Bestandteile enthalten.

In Betracht kommen z. B. Phenolharze; unter dem Begriff Phenolharze werden hier Kondensationsprodukte von Phenol oder Derivaten des Phenols, z. B. o-, m- oder p-Kresol, und Aldehyden oder Ketonen, insbesondere Formaldehyd, verstanden. Als Phenolharze besonders geeignet sind Resole und insbesondere sog. Novolake, dabei handelt es sich um Phenolharze, welche durch saure Kondensation von Phenol oder Kresolen mit Formaldehyd erhältlich sind, insbesondere mit einem molaren Überschuss des Phenols. Die Novolake sind vorzugsweise in Alkoholen oder Aceton löslich. In Betracht kommen auch Anhydrid-Vernetzer wie z. B. Phthalsäureanhydrid, Trimellitsäureanhydrid, Benzophenontetracarbonsäure-dianhydrid, Tetrahydrophthalsäureanhydrid, Hexahydrophthalsäureanhydrid, 4-Methyl-tetrahydrophthalsäureanhydrid, 3-Methyl-tetrahydrophthalsäureanhydrid, 4-Methyl-hexahydrophthalsäureanhydrid oder 3-Methyl-hexahydrophthalsäureanhydrid.

Die Phenolharze und Anhydridhärter vernetzen mit Epoxyverbindungen in Form einer Polyaddition.

Als nicht-reaktive Bestandteile seien Harze genannt, die keine weitere Vernetzungsreaktion eingehen, sowie anorganische Füllstoffe oder Pigmente.

Die Zusammensetzung kann auch Lösemittel enthalten. In Betracht kommen gegebenenfalls organische Lösemittel, um gewünschte Viskositäten einzustellen.

In einer bevorzugten Ausführungsform enthält die Zusammensetzung Lösemittel allenfalls in untergeordneten Mengen (kleiner 20 Gew.-Teile, insbesondere kleiner 10 bzw. kleiner 5 Gew.-Teile auf 100 Gew.-Teile Epoxyverbindung) und besonders bevorzugt kein Lösemittel (100 % System).

Bevorzugte Zusammensetzungen bestehen zu mindestens 30 Gew.-%, vorzugsweise zu mindestens 50 Gew.-%, ganz besonders bevorzugt zu mindestens 70 Gew.-% aus Epoxyverbindungen (abgesehen von ggf. mitverwendeten Lösemitteln).

Die Härtung der Harze bei der späteren Anwendung kann nach bekannten Verfahren erfolgen, dabei kann auf die vorstehend zitierte Literatur verwiesen werden.

Geeignete Härter werden beispielsweise als Härter B in der EP-A-2 113 525 beschrieben.

Die Epoxidharze können, falls notwendig, ferner Tixotropiermittel oder Zähigkeitsverbesserer, Schichtmineralien und/oder Blockcopolymere enthalten, wie sie in der EP-A-2 113 525 in den Abschnitten [0049] bis [0070] beschrieben sind. Ferner können die Epoxidharze weitere Katalysatoren, Stabilisatoren, insbesondere Hitze-und/oder Lichtstabilisatoren, Weichmacher, Lösungsmittel, mineralische oder organische Füllstoffe, Treibmittel, Farbstoffe und Pigmente, Korrosionsschutzmittel, Tenside, Entschäumer und Haftvermittler aufweisen.

Beim Reaktivverdünner kann es sich beispielsweise um einen Epoxidgruppentragenden Reaktivverdünner handeln, der beispielsweise ausgewählt sein kann aus
- Glycidylether von monofunktionellen gesättigten oder ungesättigten, verzweigten oder unverzweigten, zyklischen oder offenkettigen C₄-C₃₀ Alkoholen, insbesondere ausgewählt aus der Gruppe bestehend aus Butanolglycidylether, Hexanolglycidylether, 2-Ethylhexanolglycidylether, Allylglycidylether, Tetrahydrofurfuryl- und Furfurylglycidylether, Trimethoxysilylglycidylether.
- Glycidylether von difunktionellen gesättigten oder ungesättigten, verzweigten oder unverzweigten, zyklischen oder offenkettigen C₂-C₃₀-Alkolen, insbesondere ausgewählt aus der Gruppe bestehend aus Ethylenglykol-, Butandiol-, Hexandiol-, Oktandiolgylcidylether, Cyclohexandimethanoldigylcidylether und Neopentylglycoldiglycidylether.
- Glycidylether von tri- oder polyfunktionellen, gesättigten oder ungesättigten, verzweigten oder unverzweigten, zyklischen oder offenkettigen Akoholen wie epoxidiertes Rhizinusöl, epoxidiertes Trimethylolpropan, epoxidiertes Pentaerythrol oder Polyglycidylether von aliphatischen Polyolen wie Sorbitol, Glycerin oder Trimethylolpropan.
- Glycidylether von Phenol- und Anilinverbindungen insbesondere ausgewählt aus der Gruppe bestehend aus Phenylglycidylether, Kresylglycidylether, p-tert.-Butylphenylglycidylether, Nonylphenolglycidylether, 3-n-Pentadecenyl-glycidylether (aus Cashewnuss-Schalen-Öl), N,N-Diglycidylanilin und Triglycdiyl von p-Aminophenol.
- Epoxidierte Amine wie N, N-Diglycidylcyclohexylamin.
- Epoxidierte Mono- oder Dicarbonsäuren insbesondere ausgewählt aus der Gruppe bestehend aus Neodecansäure-glycidylester, Methacrylsäureglycidylester, Benzoesäureglycidylester, Phthalsäure-, Tetra- und Hexahydrophthalsäurediglycidylester und Diglycidylester von dimeren Fettsäuren sowie Terephthalsäure-und Trimelitsäuregylcidylester.
- Epoxidierte di- oder trifunktionelle, nieder- bis hochmolekulare Polyetherpolyole, insbesondere Polyethylenglycol-diglycidylether oder Polypropyleneglycol-diglycidylether.

Besonders bevorzugt sind Hexandioldiglycidylether, Kresylglycidylether, p-tert.-Butyl-phenylglycidylether, Polypropylenglycoldiglycidylether und Polyethylenglycoldiglycidylether.

Weitere Reaktivverdünger sind ebenfalls im Kunststoffhandbuch wie auch in EP-A-1 810 985 beschrieben.

Bei Mitverwendung eines Reaktiverdünners beträgt dessen Anteil, bezogen auf das Epoxidharz ohne Kohlenstoff-Füllstoffe, vorzugsweise 0 bis 50 Gew.-%, besonders bevorzugt 1 bis 25 Gew.-%.

Weitere geeignete Komponenten der Epoxidharzformmassen sind beispielsweise beschrieben sind Kunststoffhandbuch, Band 10, Duoplaste, Hansaverlag (ISBN 3-446-14418-8).

Erfindungsgemäß werden die mit Kohlenstoff-Füllstoffen gefüllten Epoxidharzformmassen als Masterbatch zum Einbringen der Kohlenstoff-Füllstoffe in Epoxidharze verwendet. Daher müssen die Epoxidharzformmassen noch nicht alle der genannten weiteren Inhaltsstoffe eines fertigen Epoxidharzes aufweisen. Es kann sich insbesondere um Mischungen aus Epoxidharz, gegebenenfalls Reaktivverdünner und Kohlenstoff-Füllstoffen handeln. Der Masterbatch wird dabei im weiteren Verfahren mit Epoxidharz verdünnt und mit weiteren Komponenten formuliert, beispielsweise durch Vermischen mit einem Härter und einem Beschleuniger oder Aktivator, worauf sich die Härtungsstufen anschließen können.

Der Gehalt an Kohlenstoff-Füllstoffen in den gefüllten Epoxidharzformmassen beträgt vorzugsweise 0,05 bis 25 Gew.-%, besonders bevorzugt 0,1 bis 15 Gew.-%.

Dabei können die Kohlenstoff-Füllstoffe aus beliebigen geeigneten Kohlenstoff-Füllstoffen ausgewählt sein, vorzugsweise aus Ruß, Kohlenstoff-Fasern, Kohlenstoff-Nanotubes und Gemischen davon.

Ruß (Carbon Black) und Graphit sind beispielsweise beschrieben in Donnet, J. B. et al., Carbon Black Science and Technology, Second Edition, Marcel Dekker, Inc., New York 1993. Es kann auch Leitfähigkeitsruß eingesetzt werden, der auf hochgeordnetem Ruß basiert. Dieser ist beispielsweise beschrieben in DE-A-102 43 592, insbesondere [0028] bis [0030], in EP-A-2 049 597, insbesondere Seite 17, Zeilen 1 bis 23, in DE-A-102 59 498, insbesondere in Absätzen [0136] bis [0140], sowie in EP-A-1 999 201, insbesondere Seite 3, Zeilen 10 bis 17.

Für eine Beschreibung geeigneter Kohlenstoff-Nanotubes (CNT) findet sich in DE-A-102 43 592, insbesondere in Absätzen [0025] bis [0027], in EP-A-2 049 597, insbesondere auf Seite 16, Zeilen 11 bis 41, oder in DE-A-102 59 498, Absätze [0131] bis [0135]. Ferner sind geeignete Carbon Nanotubes beschrieben in WO 2006/026691, Absätze [0069] bis [0074].

Geeignete Kohlenstoffnanotubes sind ferner in WO 2009/000408, Seite 2, Zeile 28 bis Seite 3, Zeile 11, beschrieben.

Die Herstellung der erfindungsgemäßen gefüllten Epoxidharzformmassen erfolgt durch Extrusionsverfahren bei einer Temperatur vorzugsweise im Bereich von 20 bis 60 °C, besonders bevorzugt 20 bis 45 °C, insbesondere etwa Raumtemperatur (20 bis 25 °C).

Es kann beispielsweise ein wie in WO 2006/026691 beschriebenes Verfahren zum Einsatz gelangen. Ferner kann für die Herstellung auf WO 2009/000408 verwiesen werden.

Die Herstellung erfolgt vorzugsweise in einem gleichläufigen Doppelschneckenextruder. Aufgrund der niedrigen Viskosität des Epoxidharzes ist es bevorzugt, Knetelemente mit breiten Scheiben einzusetzen, um die Dispersionsqualität zu erhöhen. Insbesondere wird wie im nachfolgenden Beispiel beschrieben vorgegangen unter Einsatz des dort beschriebenen Extruders.

Das erfindungsgemäße Verfahren erlaubt die Herstellung von mit Kohlenstoff-Füllstoffen gefüllten Epoxidharzformmassen mit geringem Energieaufwand bei guten Dispersionsgraden.

Die Erfindung betrifft auch die mit Kohlenstoff-Füllstoffen gefüllten Epoxidharzformmassen, die nach dem vorstehenden Verfahren erhältlich sind.

Diese Formmassen werden erfindungsgemäß bevorzugt als Masterbatch zum Einbringen in Epoxidharze verwendet. Es kann sich jedoch auch bereits um die endgültigen gefüllten Epoxidharze handeln, die in der späteren Anwendung eingesetzt werden.

Typischerweise wird die erfindungsgemäß hergestellte gefüllte Epoxidharzformmasse als Epoxykomponente in üblichen Epoxidharzformulierungen eingesetzt und kann die bislang bekannten gefüllten Epoxidharzformmassen ersetzen.

Die Erfindung wird durch die nachstehenden Beispiele näher erläutert.

### Beispiele

Die in den Beispielen eingesetzten Epoxidharze und ihre Eigenschaften sind in der nachfolgenden Tabelle 1 zusammengefasst.

**Tabelle 1**

| | Viskosität 25 °C | Epoxy-Gehalt | |
|---|---|---|---|
| | [mPa.s] | [eq/kg] | [g/eq] |
| Araldite^{®} LY1556 | 10 000 - 12 000 | 5,3 - 5,45 | 183 - 189 |
| Epilox^{®} A 19-00 | 9 000 - 13 000 | 5,2 - 5,5 | 182 - 192 |
| Epikote^{®} Resin MGS RIM 135 | 700 - 1100 | 5,4 - 6 | 166 - 185 |

Für die Formulierung und die Härtung des Araldite- und Epilox-Harzes wurde Methyltetrahydrophthalsäureanhydrid (MTHPA) als Härter verwendet. Als Beschleuniger wurde 1-Methylimidazol eingesetzt. Zur Formulierung wurden folgende Gewichtsverhältnisse von Epoxidharz : Härter: Beschleuniger eingesetzt: 100 : 90 : 1. Das Härten erfolgte für vier Stunden bei 80 °C und nachfolgend für acht Stunden bei 140 °C. Für das Epikote-Harz wurden für die Formulierung und das Härten ein Gemisch aus zwei technischen Produkten Epikure^{®} Curing Agent MDS RIMH 134 und Epikure^{®} Curing Agent MDS RIMH 137 im Gewichtsverhältnis 20 : 80 eingesetzt. Ein Gewichtsverhältnis von Epoxidharz zu Härter von 100 : 30 wurde für die Formulierung des Harzes gewählt. Die Härtung erfolgte für 24 Stunden bei Raumtemperatur, gefolgt von sechs Stunden bei 80 °C.

Als Ruß-Füllstoff wurde Printex^{®} XE2B von Evonik Industries eingesetzt, der eine BET-Oberfläche von 1000 m²/g aufweist. Carbon-Nanotubes (CNT) wurden von Nanocyl^{®} eingesetzt. Das eingesetzte Nanocyl 7000 hatte eine Reinheit von 90 %, eine durchschnittliche Länge von 1,5 µm bei einem durchschnittlichen Durchmesser von 9,5 nm und einer BET-Oberfläche von 250 bis 300 m²/g.

Rheologische Versuche wurden auf einem MCR300 von Anton Paar GmbH durchgeführt unter Verwendung einer parallelen Plattengeometrie. Isotherme Frequenzsweeps wurden bei 25 °C bei einem Spalt von 1 mm und einem Zug von 0,1 % durchgeführt.

Die elektrische Leitfähigkeit wurde als Volumenleitfähigkeit unter Verwendung einer 4-Punktmessapparatur durchgeführt. Für jede Platte wurde die Messung an fünf Proben der Dimensionen 77 x 12 x 4 mm³ durchgeführt, die aus gehärteten Platten ausgesägt wurden. Um einen guten Kontakt zwischen Probe und Elektroden zu erreichen, wurden vier Silberelektroden direkt auf die Probe gemalt unter Verwendung einer leitfähigen Silberpaste (Leitsilber 200 von Hans Wohlbring GmbH). Als Stromquelle wurde 225 Current Source, als Spannungsmessgerät 617 Programmable Electrometer und als Strommessgerät 1000 Multimeter, jeweils Keithley Instruments, eingesetzt.

Die Herstellung der Kohlenstoff-gefüllten Epoxidharzformmassen erfolgte auf einem Extruder ZSK18 unter Verwendung zweier unterschiedlicher Schneckendesigns. Jede Schnecke wies elf Zonen auf, wobei jeweils das Ausgangsharz in Zone 0 kalt eingefüllt wurde. Bei Schnecke A folgen auf die Polymereintragszonen 0 und 1 die Förderzonen 2 bis 4, die Entgasungszone 5, die Füllstoffzugabezone 6, die Dispersionszonen 7, 8 und 9, die Entgasungszone 10 und die Austragzone 11. Für Schnecke B folgten auf die Polymerzuführzonen 0 und 1, die Transportzonen 2 und 3, die Füllstoffzugabe und Rückwärtsentgasungszone 4, die Dispersions- und Homogenisierungszonen 5, 6 und 7, die Redispergierungszonen 8 und 9, die Entgasungszone 10 und die Austragszone 11. Da die Füllstoffeintragszonen der Schnecke B räumlich früher als bei der Schnecke A installiert wurde, führte dies zu einer längeren Mischzeit für die Füllstoffe unter gleichen Bedingungen. Zahlreiche rückwärts pumpende zahnförmige Mischelemente (ZME) wurden in die Schnecke B in der Dispersionszone eingebracht. Die ZME sollen die Homogenität der Compoundierung verbessern. Eine nochmals verbesserte Durchmischung wurde durch die Schnecke A erreicht, die mehr Knetelemente mit breiten Knetscheiben aufwies.

Die nachstehende Tabelle 2 zeigt das Compoundierungsprogramm für Ruß (P) bzw. Nanotubes (N). Die bestimmten Schmelztemperaturen lagen zwischen 25 und 42 °C. Die Schneckengeschwindigkeit lag im Bereich von 100 bis 300 min⁻¹, und der Durchsatz lag im Bereich von 5 bis 15 kg/h.

**Tabelle 2**

| Probe | Epoxy-System | Füllstoff | | Verarbeitung | | | |
|---|---|---|---|---|---|---|---|
| | | Typ | Gew.-% | Schneckendesign | Schnecken-geschwindigkeit[min⁻¹] | Durchsatz[kg/h] | T [°C] |
| 1 | Epilox | P | 5 | A | 200 | 10 | 25 |
| 2 | Epilox | P | 5 | A | 200 | 5 | 40 |
| 3 | Epilox | P | 5 | A | 200 | 5 | 25 |
| 4 | Epilox | P | 5 | A | 200 | 15 | 26 |
| 5 | Epilox | P | 5 | A | 100 | 5 | 42 |
| 6 | Epilox | P | 5 | A | 100 | 5 | 23 |
| 7 | Epilox | P | 5 | B | 200 | 10 | 26 |
| 8 | Epilox | P | 5 | B | 200 | 5 | 25 |
| 9 | Epilox | P | 5 | B | 100 | 5 | 24 |
| 10 | Epilox | P | 5 | B | 300 | 15 | 26 |
| 11 | Epilox | N | 5 | B | 100 | 5 | 27 |
| 12 | Epilox | N | 2,4 | B | 100 | 5 | 25 |
| 13 | RIM | N | 5 | B | 100 | 5 | 27 |

| | | | | | | | |
|---|---|---|---|---|---|---|---|
| P: Printex XE2B, N: Nanocyl NC 7000 | | | | | | | |

Zum Vergleich wurden Proben mit anderen Dispergierungstechnologien hergestellt. Die Charakterisierung dieser Proben ist in der nachstehenden Tabelle 3 angegeben.

**Tabelle 3**

| Probe | EpoxySystem | Füllstoff | | Verarbeitung | | |
|---|---|---|---|---|---|---|
| | | Typ | Gew.-% | Vorrichtung | Verweilzeit | T [°C] |
| 14 | Araldite | P | 0,5 | Ballmühle | 3 h 45+5 h | 56-64 |
| 15 | Araldite | N | 0,5 | Ballmühle | 5 h 25 | 66 |
| 16 | Araldite | N | 5 | Kneter | 2 h | RT |
| 17 | Araldite | N | 15 | Kneter | 1,5 h | RT |
| 18 | RIM | N | 0,5 | Ballmühle | 6 h | 55 |
| 19 | RIM | N | 5 | Kneter | 4 h | RT |

| | | | | | | |
|---|---|---|---|---|---|---|
| RT = Raumtemperatur (22 °C) | | | | | | |

Bei einer Dispersion von 5 Gew.-% CNT in Epilox oder in RIM ist das Material nicht mehr fließfähig, sondern eine hochviskose Paste, die die Form der extrudierten Stränge beibehält.

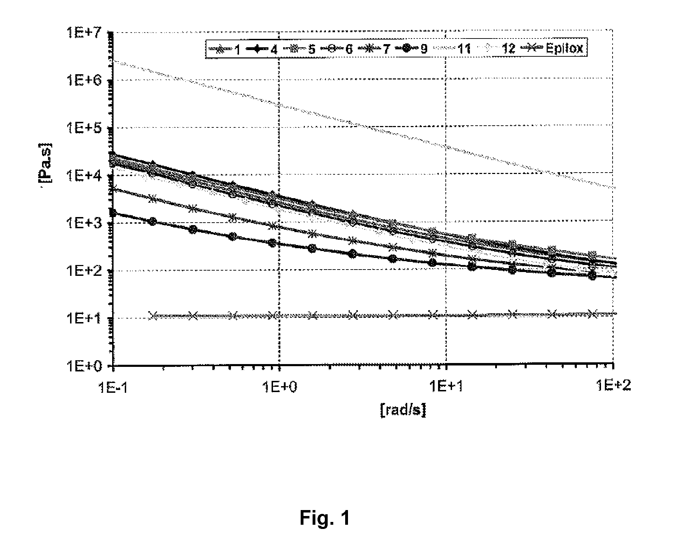

Rheologiemessungen, die an den Proben durchgeführt wurden, zeigen eine Variation der Viskosität mit der Frequenz. Dieses Verhalten ist typisch für Suspensionen in Flüssigkeiten. Für niedrige Frequenzen zeigen hohe Viskositäten kleine Teilchengrößen und damit eine gute Dispersionsqualität an. Die Ergebnisse sind in der beigefügten Figur 1 zusammengestellt, wobei die Frequenz [rad/s] der Viskosität (Pa. s) gegenübergestellt ist. Es handelt sich um 5 gew.%-ige Dispersionen von Printex XE2B (1,4,5,6,7,9) bzw. Dispersionen von Nanocyl NC7000 (11:5Gew.-% und 12 : 2,5 Gew.-%) in Epilox A19-00 bei 25 °C.

Für die verdünnten Systeme wurden zunächst Härter, Beschleuniger und Harz wie vorstehend beschrieben vorbereitet.

Für die Verdünnung des Masterbatches wurden sowohl Masterbatch als auch Epoxidharz in einem Glasgefäß mit Laborrührer vermischt.

Die Volumenwiderstände gehärteter Proben wurden zudem zur Bestimmung der elektrischen Leitfähigkeit untersucht. Für Füllstoffkonzentrationen von 0,5 Gew.-% bzw. 1 Gew.-% ergaben sich für Printex-Dispersionen die in der folgenden Tabelle 4 angegebenen Volumenwiderstände.

**Tabelle 4**

| **Dispersion (MB)** | | | **Platte nach Verdünnung** | |
|---|---|---|---|---|
| **Additiv** | **Gew.-%** | **Dispersion** | **Verdünnt auf (Gew.-%)** | **R (Ohm*cm)** |
| P | 5 | 1 | 1 | 3,20E+03 |
| P | 5 | 1 | 0,5 | 1,10E+05 |
| P | 5 | 2 | 1 | 3,10E+03 |
| P | 5 | 2 | 0,5 | 4,70E+04 |
| P | 5 | 3 | 1 | 3,50E+03 |
| P | 5 | 3 | 0,5 | 5,40E+04 |
| P | 5 | 4 | 1 | 4,40E+03 |
| P | 5 | 4 | 0,5 | 3,20E+04 |
| P | 5 | 5 | 1 | 1,00E+04 |
| P | 5 | 5 | 0,5 | 7,50E+04 |
| P | 5 | 5 | 1 | 6,10E+03 |
| P | 5 | 5 | 0,5 | 3,10E+04 |
| P | 5 | 5 | 1 | 8,40E+03 |
| P | 5 | 5 | 0,5 | 3,60E+04 |
| P | 5 | 5 | 1 | 3,20E+03 |
| P | 5 | 5 | 0,5 | 6,20E+04 |
| P | 5 | 5 | 1 | 4,10E+04 |
| P | 5 | 5 | 0,5 | 4,70E+05 |
| P | 5 | 5 | 1 | 5,90E+03 |
| P | 5 | 5 | 0,5 | 7,60E+04 |
| P | 0,5 | 0,5 | 0,2 | 9,30E+05 |
| P | 0,5 | 0,5 | 0,1 | 1,80E+07 |

Ein Teil der Nanocyl enthaltenden Proben wurde auf 0,1 Gew.-% und 0,2 Gew.-% Nanocyl-Anteil verdünnt.

Ein Vergleich der Volumenwiderstände in den Nanocyl enthaltenden Proben zeigt, dass die geringsten Widerstände für die extrudierten Proben erhalten werden. Dies zeigt, dass die Extrusion zu einer besseren Verteilung der Kohlenstoff-Füllstoffe führt.

Für Nanocyl NC 7000 in Epilox A19-00 bzw. Araldite LY15556 enthaltende Proben wurden für Füllstoffgehalte von 0,1 Gew.-% bzw. 0,2 Gew.-% die in der folgenden Tabelle 5 angegebenen Volumenwiderstände bestimmt.

**Tabelle 5**

| **Dispersion (MB)** | | | **Platte nach Verdünnung** | |
|---|---|---|---|---|
| **Additiv** | **Gew.-%** | **Dispersion** | **Verdünnt auf (Gew.-%)** | **R (Ohm*cm)** |
| N | 5 | 11 | 0,2 | 1,00E+03 |
| N | 5 | 11 | 0,1 | 1,10E+04 |
| N | 2,4 | 12 | 0,2 | 1,70E+03 |
| N | 2,4 | 12 | 0,1 | 1,60E+04 |
| N | 0,5 | 15 | 0,2 | 5,30E+03 |
| N | 0,5 | 15 | 0,1 | 2,30E+04 |
| N | 5 | 16 | 0,2 | 5,20E+03 |
| N | 5 | 16 | 0,1 | 9,90E+04 |
| N | 15 | 17 | 0,1 | 6,80E+05 |
| N | 15 | 17 | 0,2 | 2,30E+04 |

Für das Nanocyl NC7000 in Epikote RIM enthaltene System wurden für Füllstoffgehalte von 0,1 Gew.-% bzw. 0,2 Gew.-% die in der folgenden Tabelle 6 angegebenen Volumenwiderstände bestimmt.

**Tabelle 6**

| **Dispersion (MB)** | | | **Platte nach Verdünnung** | |
|---|---|---|---|---|
| **Additive** | **C. (Gwt%)** | **Dispersion** | **Verdünnt auf (Gew.-%)** | **R (Ohm*cm)** |
| N | 5 | 13 | 0,2 | 3,96E+03 |
| N | 5 | 13 | 0,1 | 1,39E+04 |
| N | 0,5 | 18 | 0,2 | 2,83E+04 |
| N | 5 | 19 | 0,2 | 9,09E+04 |

## Patentansprüche

1. Verfahren zur Herstellung von mit Kohlenstoff-Füllstoffen gefüllten Epoxidharzformmassen durch Einbringen der Kohlenstoff-Füllstoffe in ein Epoxidharz, das einen Reaktivverdünner enthalten kann, in einem gleichläufigen Doppelschneckenextruder, **dadurch gekennzeichnet, dass** das Epoxidharz einen Gehalt an Epoxidgruppen von 80 bis 550 g/eq, vorzugsweise 130 bis 400 g/eq, aufweist.

2. Verfahren nach Anspruch 1, **dadurch gekennzeichnet, dass** das Epoxidharz einen Schmelzpunkt von weniger als 60 °C, vorzugsweise von weniger als 45 °C, aufweist.

3. Verfahren nach Anspruch 1 oder 2, **dadurch gekennzeichnet, dass** die Extrusion bei einer Temperatur im Bereich von 20 bis 60 °C, vorzugsweise 20 bis 45 °C, durchgeführt wird.

4. Verfahren nach einem der Ansprüche 1 bis 3, **dadurch gekennzeichnet, dass** das Epoxidharz einen Reaktivverdünner enthält.

5. Verfahren nach einem der Ansprüche 1 bis 3, **dadurch gekennzeichnet, dass** das Epoxidharz keinen Reaktivverdünner enthält.

6. Verfahren nach einem der Ansprüche 1 bis 5, **dadurch gekennzeichnet, dass** die Viskosität des Epoxidharzes bei 25 °C 50 bis 15000 mPa s beträgt.

7. Verfahren nach einem der Ansprüche 1 bis 6, **dadurch gekennzeichnet, dass** die Kohlenstoff-Füllstoffe ausgewählt sind aus Ruß, Kohlenstoff-Fasern, Kohlenstoff-Nanotubes und Gemischen davon.

8. Verfahren nach einem der Ansprüche 1 bis 7, **dadurch gekennzeichnet, dass** die Menge an Kohlenstoff-Füllstoffen, bezogen auf die gefüllte Epoxidharzformmasse, 0,05 bis 25 Gew.-%, vorzugsweise 0,1 bis 15 Gew.-%, beträgt.

9. Mit Kohlenstoff-Füllstoffen gefüllte Epoxidharzformmasse, erhältlich nach einem Verfahren gemäß einem der Ansprüche 1 bis 8.

10. Verwendung der mit Kohlenstoff-Füllstoffen gefüllten Epoxidharzformmasse gemäß Anspruch 9 als Masterbatch zum Einbringen in Epoxidharze.
